# EUROPEAN PATENT APPLICATION

(11) **EP 1 569 151 A1**
(43) Date of publication of application: **31.08.2005**
(21) Application number: 05100984.3
(22) Date of filing: 11.02.2005
(51) Int. Cl.: G06F 17/60

(54) **Method and system for reducing unsolicited messages using variable pricing and conditional redemption**

(30) Priority: 27.02.2004 US 788677
(71) Applicant: MICROSOFT CORPORATION, Redmond, WA 98052 (US)
(72) Inventor: Smith, Michael D., Redmond, WA 98052 (US); Walli, Stephen R. c/o MICROSOFT CORPORATION, Redmond, WA 98052 (US)
(74) Representative: Grünecker, Kinkeldey, Stockmair & Schwanhäusser Anwaltssozietät

(57) **Abstract**

Methods and systems for reducing unsolicited electronic messages through variable pricing and conditional redemption are provided. Each ticket may have an associated value that is specified by a sender of an electronic message. This is referred to as "variable pricing." A ticket in a message acts as a guarantee that the ticket server will redeem the ticket for the value. Upon reviewing a message with a ticket, the recipient may choose to redeem the ticket, which is referred to as "conditional redemption." If the ticket is redeemed, then the ticket server debits the sender's account so that the sender has effectively paid to send the message.

## Description

### TECHNICAL FIELD

The described technology relates generally to handling electronic messages and, more particularly, to methods and systems for reducing unsolicited electronic messages.

### BACKGROUND

The costs associated with sending and receiving electronic messages have reduced significantly to a point where the marginal cost of sending or receiving such a message is nearly zero. Commercial and other entities are thus able to send millions of messages without incurring significant costs. As an example, an internet advertising entity may offer to send an electronic message to valid electronic mail addresses collected from its list of millions of addresses at a rate of $190 per million addresses. Such low costs have contributed to the proliferation of the more than 13 billion unsolicited electronic messages, commonly referred to as "spam," that are estimated to be sent worldwide on a daily basis. On August 4, 2003, one mail system automatically classified 2.1 billion electronic messages as spam out of 2.6 billion electronic messages it handled that day. (Martin Abadi et al., "Bankable Postage for Network Services," Springer-Verlag 2003, which is hereby incorporated herein by reference in its entirety.)

Several techniques are presently used to reduce spam including filtration, challenge/response, regulation, litigation, and pricing techniques.

Filtration techniques may classify an incoming message based on various attributes of the message. An Internet Service Provider ("ISP") may classify an incoming message as spam by, e.g., recognizing that the message does not contain a valid sender's electronic mail address. A recipient may use rules to classify incoming messages to identify and handle spam appropriately. As an example, a user of an electronic mail client program may set up an "Inbox rule" to move all incoming messages with a subject heading including the text "$$$" to a Deleted Items folder. A problem with filtration techniques is that commercial senders of messages (e.g., "spammers") adapt their messages to known or commonly employed filters to ensure that messages are not classified as spam. As a result, filters may require a tremendous amount of manual intervention to keep up with these adaptations. Another problem with filtration techniques is that a filter rule may inadvertently classify as spam a message that the intended recipient may want to receive.

Challenge/response techniques may require a sender to, e.g., demonstrate that the sender is a human. As an example, the sender may be challenged with a Turing test, such as being required to identify an object in a drawing. A problem with this approach is that an intermediary is required to process an initial challenge and validate the response to the challenge. If a recipient subscribes to an automated mailing list or receives legitimate messages from a service provider using an automated system, the recipient will not receive the message because the automated system will likely be incapable of responding to the Turing test (which, of course, is the purpose of the test). In such a case, the recipient may need to manually indicate that the sender is authorized to send messages to the recipient.

Regulation techniques may include introducing legislation aimed at reducing spam. As an example, the CAN SPAM Act (the "Act") imposes criminal sanctions on those who knowingly falsify header information of electronic messages in an effort to propagate unsolicited commercial advertising. The Act also requires the Federal Telecommunications Commission to create a "do-not-spam" registry of recipients who wish to opt out of receiving unsolicited commercial electronic messages. A problem with regulation techniques is that they may curtail free speech, even if that speech is commercial in nature. Another problem with these techniques is that jurisdictional issues may make it difficult, if not impossible, to prosecute foreign spammers.

Litigation techniques employ court systems to reduce spam. As an example, in *Intel v. Hamidi,* the California Supreme Court decided in June 2003 that a defendant can be guilty of trespass to chattels (i.e., intentional intermeddling with personal property belonging to someone other than the intermeddler) by sending a large number of commercial electronic messages when these messages cause harm to a computer system. Similarly, CompuServe won a trespass to chattels lawsuit in 1997 after a business entity sent tens of millions of unsolicited commercial messages to its customers. A problem with litigation techniques is that they are very expensive. Only ISPs and other large entities that can suffer significant financial or other harm would likely litigate.

Pricing techniques may charge senders a fee for sending an electronic message or require senders to perform a computational task before sending a message. As an example, in 2003, an ISP began charging senders a fee to send bulk electronic messages to the ISP's customers. A problem with this technique is that the ISP controls which messages a recipient receives. Furthermore, if multiple recipients with electronic message addresses provided by the ISP wish to subscribe to a mailing list, the ISP may treat a message to the mailing list as bulk electronic mail, and require the sender to pay a fee. If the mailing list sender refuses to pay, the recipients may not receive the message.

When a sender is required to perform a computational task before sending a message, and a recipient of the message can verify that the computational task was indeed performed, a sender of bulk messages may be unable to perform the required computation cheaply on a single computing device. As an example, if the computation takes half a second to perform, a sender of one million messages may be rendered incapable of sending the messages because of the time it would take, but a sender of a single message would be undeterred from sending the message. However, a sender who is able to use a very fast computer (e.g., a "supercomputer") or gather a large number of machines to perform the computation and send the message (e.g., by installing "trojan horses" on unsuspecting computers) would be able to send their message.

Another problem relating to spam is impersonation, which is more commonly referred to as "spoofing." A "trojan horse" program or a virus program may impersonate a user. A trojan horse program is a computer program that an unsuspecting user intentionally installs to perform a function that in fact also performs a second unintended function that is usually undesired by the user. A virus is a computer program that often spreads from one computer to another via, e.g., electronic mail and also performs undesired functions when executed. An undesired function may be the sending of electronic messages indicating that these messages were sent from the electronic mail address of a user of the computer on which the trojan horse or virus programs reside. As a result, spam can be sent under the name of a legitimate sender, but against the wishes of that sender.

Each of these techniques has various shortcomings, as described above. It would be desirable to have a technique for reducing spam that would avoid some or all of the problems described above.

### SUMMARY

A method and system for reducing unsolicited electronic messages is disclosed. In an embodiment, a sender acquires a ticket from a ticketing entity with a value (e.g., $1) designated by the sender. The sender adds the ticket to a message before sending it. Upon receiving the message, the recipient can validate the ticket with the ticketing entity. If valid, the recipient can conditionally redeem the value of the ticket from the ticketing entity.

### BRIEF DESCRIPTION OF THE DRAWINGS

Figure 1 is a block diagram illustrating components of an embodiment of a system for reducing unsolicited electronic messages using variable conditional pricing and redemption.

Figure 2 is a block diagram illustrating the components of Figure 1 in further detail.

Figure 3 is a flow diagram illustrating an embodiment of a Request_Tickets routine that is performed by a Sender component of the system.

Figure 4 is a flow diagram illustrating an embodiment of a Request_Tickets routine that is performed by a Ticket Server component of the system.

Figure 5 is a flow diagram illustrating an embodiment of a Send_Mail routine that is performed by a Sender of the system.

Figure 6 is a flow diagram illustrating an embodiment of a Filter_Outgoing_Mail routine that is performed by a Mail Server component of the system.

Figure 7 is a flow diagram illustrating an embodiment of a Receive_Mail routine that is performed by a Recipient component of the system.

Figure 8 is a flow diagram illustrating an embodiment of a Ticket_Valid routine that is performed by a Ticket Server component of the system.

Figure 9 is a flow diagram illustrating an embodiment of a Redeem routine that is performed by a Ticket Server component of the system.

### DETAILED DESCRIPTION

Methods and systems for reducing unsolicited electronic messages through variable pricing and conditional redemption are provided. In an embodiment, the system for reducing unsolicited electronic messages involves interactions among a ticket server, a sender's mail server, a sender's mail client, and a recipient's mail system (server or client). The sender may request and receive tickets from the ticket server. Each ticket may have an associated value that is specified by the sender. Because the value is specified by the sender, this is referred to as "variable pricing." The ticket acts as a guarantee that the ticket server will redeem the ticket for the associated value if requested. The sender may add this ticket to a message to be sent to a recipient. When the sender sends the message, the sender's mail server may determine whether the message contains a ticket that can be authenticated as coming from the sender. If the ticket cannot be authenticated, then the sender's mail server can simply discard the message without forwarding it. If the message is forwarded, the recipient's mail system may validate the ticket with the ticket server to ensure that it is redeemable and may classify the message based on the value associated with the ticket. If the ticket cannot be validated, the recipient's mail system may discard the message. Upon reviewing a message with a validated ticket, the recipient may choose to redeem the ticket from the ticket server. Because the recipient has a choice of whether to redeem the ticket, this is referred to as "conditional redemption." If the ticket is redeemed, then the ticket server debits the sender's account so that the sender has effectively paid to send the message. In an embodiment, the ticket server may credit a portion of the redeemed value to the recipient's account as an incentive for the recipient to view the message and redeem the ticket.

By using variable pricing and conditional redemption, the system can reduce unsolicited electronic messages by driving up the cost of sending such messages. Initially, a recipient's mail system can determine whether each received message includes a ticket that can be redeemed. If a message does not contain such a ticket, the recipient's mail system can discard it, place it in a junk mail folder, or take some other action automatically in accordance with the recipient's directions. The recipient's mail system can also sort messages based on the value of the tickets. The recipient can then view the messages with a high value ticket and defer the viewing of the other messages. The recipient may even specify a minimum ticket value that will be accepted. For example, the recipient may want their mail system to discard all messages with a ticket value less than $1. The recipient's mail system may automatically notify all senders who sent a message with a ticket value less than $1 to resend the message with a higher ticket value. Alternatively, parties may agree that they will include a ticket value of at least $1 in all messages between them. In such a case, a recipient's mail system can automatically redeem all tickets with a value of less than $1 and then discard those messages without sending any notification to the senders. If a recipient receives a message with a ticket value greater than $1, the recipient can choose not to redeem the ticket if the sender is someone from whom the recipient wants to receive messages. Alternatively, the recipient can choose to redeem the ticket and delete the message automatically if the sender is unknown.

The use of variable pricing and conditional redemption thus provides an effective way to control unsolicited electronic messages. Recipients can set their minimum ticket values so high as to be prohibitively expensive for a sender of unsolicited messages. For example, if spam is sent with a ticket value of $1 to 1,000,000 recipients, it would cost the spammer $1,000,000 if every ticket is redeemed. In contrast, it may cost a sender from whom recipients want to receive messages less because some recipients would not redeem the tickets of messages they want to receive. Furthermore, by targeting a message at people who are more likely to read the message, the spammer's advertising money would be more effectively spent. As a result, spammers would need to more narrowly focus their messages on recipients who may be interested in their messages and thus might not redeem the ticket or at least would read the message. Redeeming a ticket could be an indication to a sender that the recipient is not interested in receiving any more messages from that sender, at least for that ticket value.

Because of variable pricing, different senders may specify different values for equivalent messages depending on the value they place on the message. Since recipients will likely not view messages with a low ticket value (but will redeem those tickets) senders may be motivated to increase their ticket values and be more selective when identifying recipients in hopes that the selected recipients will at least view the messages, and also perhaps not redeem the tickets. Since the senders still risk losing the entire value of their increased ticket value, the system motivates senders to limit the recipients to only those who will be truly interested in the message. Through a process of trial and error, a sender may be able to establish a list of recipients who are so interested in their messages that they will not redeem a ticket with a relatively high value or will likely view the messages. The trusted entity may provide information on which recipients redeemed tickets so the sender can drop them from their mailing list or increase the value of the ticket that is sent to a recipient who deleted a message without reading it. At some ticket value, it would not be cost effective for the sender to send a message to a recipient.

In an embodiment, a sender's mail server may enforce a minimum ticket value on messages sent through it. In such a case, the sender's mail server, upon receiving a message without the minimum ticket value, could notify the sender (assuming the sender is not an impostor) and discard it.

Thus, by letting recipients selectively read mail they find valuable, the system enables the market to determine an appropriate value for various unsolicited messages.

The sender's mail server can help to prevent an impostor from impersonating the sender. A sender who wants to prevent being impersonated can have their mail client register an end code with a trusted entity. The end code represents the last code in a sequence of codes generated by successively applying a one-way function to the code generated by the previous application starting with a start code. (A one-way function is a function that relatively easily computes a value given an input, but whose inverse is relatively hard to compute-i.e., given the value, it would be difficult to derive the input.) Application of the one-way function generates a sequence of codes starting with the start code and ending with the end code with some number of intermediate codes in between. Such a code may be referred to hereinafter as a "sender authenticating code" or simply "a code." Upon receiving a registration request from a sender (via a secure mechanism so that the sender's request cannot be impersonated), the trusted entity provides the end code to the sender's mail server. The sender's mail client can add a code of the sequence to each message that the sender sends in reverse order of generation, starting with the penultimate code. When the sender's mail server receives a message from the sender's mail client, it can verify whether the code that is included in the message can be used to derive the end code. If so, the sender's mail server knows that the message was sent by the sender rather than an impostor. If the sender's mail server cannot verify the code, then it may discard the message on the assumption that the sender is being impersonated. If an impostor somehow intercepts a message and steals its code, the impostor could possibly use that code to impersonate one message. The impostor, however, could not use that code to send any other messages because it is very difficult to identify the previous code in the sequence, which is why a one-way function is used. Although the impostor could generate the next code in the sequence, the sender's mail server will have already received a message with that code (assuming the sender's mail client adds codes to messages in reverse order of generation) and will discard the message because it contains a duplicate code.

Each ticket may include a code of a sequence generated by the one-way function. If so, it may be appropriate for the ticket server to generate the sequence of codes and embed those codes in the tickets it provides to senders. When a ticket includes a code of the sequence, the sender's mail client should add tickets to messages based on the reverse order of generation of the sequence of codes. As described above, since the sender's mail server has the end code of the sequence, it can verify whether each ticket has the appropriate code and thus verify that the sender is not being impersonated. One skilled in the art will appreciate that the tickets and codes can be used independently in that tickets can be used without sender authenticating codes, and sender authenticating codes can be used to authenticate senders without using tickets.

When adding a ticket to a message, the sender may also need to add an indication of a trusted entity that is trusted by both senders and recipients. The trusted entity controls the ticket server that issued the ticket. This trusted entity may be either a financial entity or the sender's ISP. This entity may have an account for the sender that the sender credits by acquiring tickets. This entity may also have an account for the recipient, or may coordinate value transfers with another entity that has an account for the recipient.

Upon receipt of the message, the recipient's mail system may validate the ticket by contacting the trusted entity, which may be indicated in the message, or by checking a checksum or a digital signature of the message. Upon validating a ticket, the trusted entity may note that it has been validated and prevent that ticket from again being successfully validated. The trusted entity, of course, will only allow a ticket to be redeemed once. Thus, a sender cannot use a ticket to send multiple messages, and a recipient (or any other party) cannot redeem the ticket multiple times. To facilitate the tracking of validations and redemptions, each ticket may have a unique identification that is assigned and digitally signed by the ticket server.

A recipient's electronic mail system may classify an incoming message based on a value associated with the ticket. As an example, if the message has no ticket or has a ticket with no value, the program may move the message to a "Free" folder. However, if the message contains a ticket with a value exceeding a threshold value previously indicated by the recipient, the mail system may move the message into the previously indicated folder. Because this threshold is a personal preference, one user may choose to automatically redeem all tickets with a value less than $1 and discard those messages, and another may choose to read all messages containing a ticket valued more than 50¢ and optionally redeem those tickets. Upon reviewing a message, the recipient may choose to redeem the ticket. As an example, if the message is from a colleague or an acquaintance, the recipient may choose not to redeem the ticket. However, if the message is spam, the recipient may choose to redeem the ticket. If the recipient redeems the ticket, the recipient's mail system requests the trusted entity to debit the value from the sender's account and credit the recipient's account. If the recipient does not have an account with the trusted entity, the recipient may indicate a second entity at which the recipient has an account. The trusted entity of the sender may then transfer the ticket's value to the recipient's account at the second entity. If the recipient elects not to redeem the ticket, the sender's account is not debited. However, the ticket may nonetheless not be used again even if the recipient notifies the sender that it is not being redeemed. Trusted entities may charge fees to senders, recipients, ISPs, and others for these services.

Because requesting tickets from a ticket server can have a relatively high transactional cost, a sender and a trusted entity may want ticket acquisitions to occur in relatively large blocks. A ticket may have various associated values, as requested by the sender. As an example, a ticket may have a value of 37¢ or $1. When requesting a ticket, a sender may request a large block of tickets, for example, 1000 tickets. A 1000-ticket block having tickets valued at 37¢ each would have a total value of $370. Similarly, a 100-ticket block having tickets valued at $1 each may have a total value of $100. Alternatively, a block may have tickets with different values. As an example, a 1000-ticket block may comprise 500 tickets with no value, 400 tickets with a value of 37¢ each, and 100 tickets with a value of $1 each. Such a block may have a total value of $248 (i.e., $0x500 + $0.37x400 + $1x100). A block of tickets with different values might be impractical if tickets also include a sender authenticating code since the tickets of the block would need to be sent in a specific order. Tickets may alternatively have a fixed price (e.g., 5¢) and, in such a case, a sender can effect variable pricing by adding multiple tickets to a message.

A sender's account may have a credit limit. When a sender acquires tickets from a ticketing entity, the sender draws from this credit limit to increase the sender's account balance. When a recipient redeems the tickets, the sender's account balance is decreased by the redeemed amount. The ticketing entity may periodically bill the sender for the difference between the value of the acquired tickets and the current balance of the sender's account.

Tickets may expire after a period of time has elapsed. As an example, a sender of a message may indicate that a ticket is to expire one week after the message is sent. Alternatively, a ticket server may not let a ticket be redeemed if a period of time elapses after validating the ticket. The sender or the ticketing entity may specify this time period. A sender may set an expiry period in an attempt to limit financial exposure (e.g., when sending an advertisement relating to a limited-time offer). A ticket server may impose an expiry period to be able to efficiently use system resources (e.g., to delete rows from a database of issued tickets or to recycle used tickets). If a ticket expires without being redeemed, the sender retains the ticket value and may apply it toward subsequent ticket purchases (i.e., the sender's account balance would not be debited for the ticket's value).

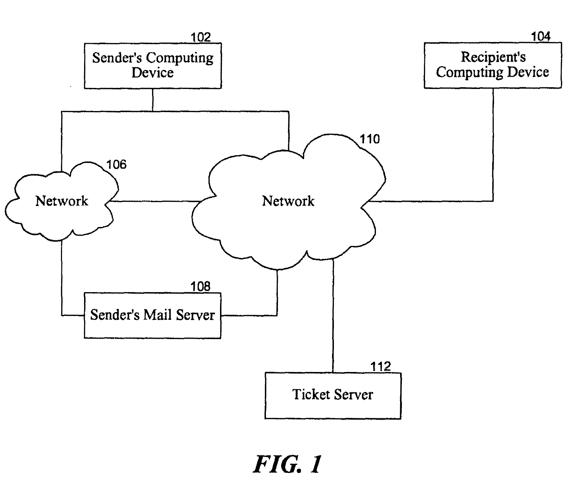

Turning now to the figures, Figure 1 is a block diagram illustrating an embodiment of a system for reducing unsolicited electronic messages through variable pricing and conditional redemption. The system has a Sender's Computing Device 102 and a Recipient's Computing Device 104. A message composed by a sender using the Sender's Computing Device may be transferred via a Network 106, such as a local area network, to a Sender's Mail Server 108. The Sender's Computing Device, the Network 106, the Sender's Mail Server, the Recipient's Computing Device, and a Ticket Server 112 may all be connected to a Network 110, such as the Internet. The Sender's Computing Device may acquire tickets that include sender authenticating codes from the Ticket Server. A sender composes messages with a ticket having a ticket value designated by the sender using the Sender's Computing Device. The Sender's Computing Device forwards the message to the Sender's Mail Server. Upon receiving the message, the Sender's Mail Server verifies that the code of the message can be used to derive the end code (which may be received from the Ticket Server when the Sender's Computing Device acquired tickets) and, if so, forwards the message to the Recipient's Computing Device. Upon receiving the message, the Recipient's Computing Device can validate the ticket of the message with the Ticket Server and process the message based on the ticket value as described above.

The computer systems of the user and the system for reducing unsolicited messages using variable pricing and conditional redemption may include a central processing unit, memory, input devices (e.g., keyboard and pointing devices), output devices (e.g., display devices), and storage devices (e.g., disk drives). The memory and storage devices are computer-readable media that may contain instructions that implement the generation system. In addition, the data structures and message structures may be stored or transmitted via a data transmission medium, such as a signal on a communications link. Various communications links may be used, such as the Internet, a local area network, a wide area network, or a point-to-point dial-up connection. The computer systems can be any type of computing device, such as a personal computer, cell phone, personal digital assistant, and so on. The computer systems may use communications links using any networking or messaging protocol.

Figure 1 illustrates an example of a suitable operating environment in which the system for reducing unsolicited messages using variable pricing and conditional redemption may be implemented. The operating environment is only one example of a suitable operating environment and is not intended to suggest any limitation as to the scope of use or functionality of the generation system. Other well-known computing systems, environments, and/or configurations that may be suitable for use with the system include personal computers, server computers, hand-held or laptop devices, multiprocessor systems, microprocessor-based systems, programmable consumer electronics, network PCs, minicomputers, mainframe computers, distributed computing environments that include any of the above systems or devices, and the like.

The system for reducing unsolicited messages using variable pricing and conditional redemption may be described in the general context of computer-executable instructions, such as program modules, executed by one or more computers or other devices. Generally, program modules include routines, programs, objects, components, data structures, and so on that perform particular tasks or implement particular abstract data types. Typically, the functionality of the program modules may be combined or distributed as desired in various embodiments.

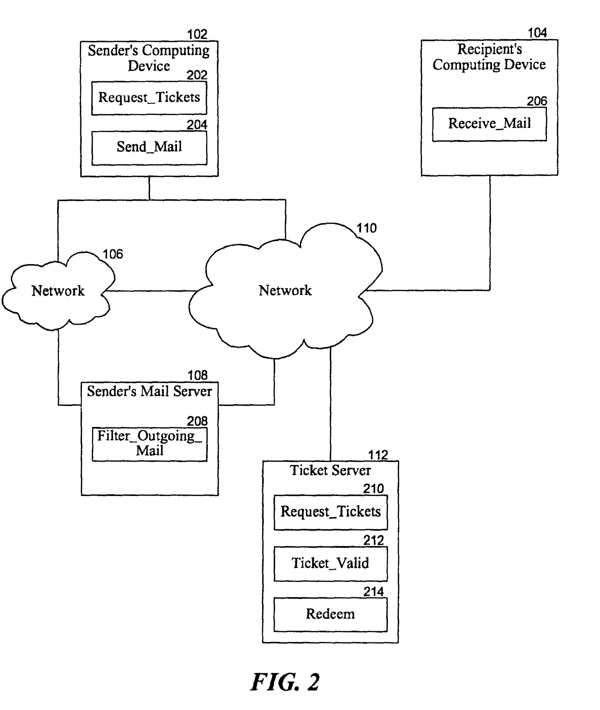

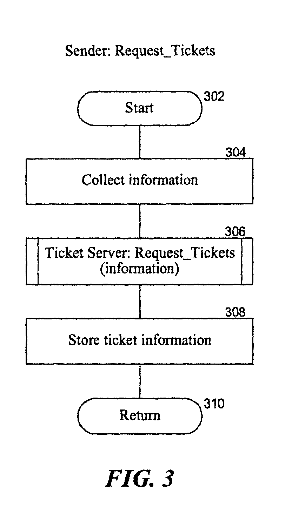

Figure 2 is a block diagram illustrating the components of Figure 1 in further detail. The components include a Request_Tickets component 202 and a Send_Mail component 204 of the Sender's Computing Device 102; a Receive_Mail component 206 of the Recipient's Computing Device 104; a Filter_Outgoing_Mail component 208 of the Sender's Mail Server 108; and a Request_Tickets component 210, a Ticket_Valid component 212, and a Redeem component 214 of the Ticket Server 112. These components individually and collectively operate to perform the methods illustrated in Figures 3-9. There may also be additional components (not shown). The system may require all users to have a strong and billable identity with access to a secure and reliable electronic messaging system.

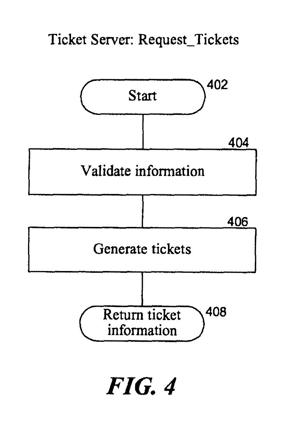

Figure 3 is a flow diagram illustrating an embodiment of a Request_Tickets routine performed by a Sender's Computing Device. This routine may be called by a sender's mail client program or some other user agent to request tickets from a Ticket Server. The routine begins at block 302. At block 304, the routine collects information relating to the desired tickets. As examples, the routine may collect a number of tickets desired and a value for the tickets. The routine may collect this information from a user of the mail client program or may retrieve this information from a previously stored data structure. At block 306, the routine calls a Request_Tickets routine of a Ticket Server and passes it the collected information. That routine is described further below in relation to Figure 4. At block 308, the routine stores ticket information returned by the Ticket Server's Request_Tickets routine. The routine then returns to its caller at block 310. The returned tickets can be included in messages.

Figure 4 is a flow diagram illustrating an embodiment of a Request_Tickets routine performed by a Ticker Server. The Ticket Server may be owned by a trusted entity that has an ability to bill senders for electronic messages they send. The system may function with financial or nonfinancial billing entities. Thus, for example, a corporation may generate tickets that it shares with its employees. In such a case, an employee may not need to acquire tickets because the corporation may add tickets to outgoing messages automatically. Alternatively, the employee may acquire tickets from the corporation's ticket server without putting the employee's own money at risk when sending business correspondence. The tickets may contain an indication of the trusted entity. This indication may uniquely identify the entity, and recipients may trust some entities but not others. Thus, a Recipient's Computing Device could filter messages containing a ticket from an untrusted entity. Alternatively, the Recipient's Computing Device could filter messages not containing a ticket from a trusted entity. The routine begins at block 402 where it receives information relating to desired tickets as parameters. As indicated above in reference to Figure 3, this information may include a number of tickets desired and values for the tickets. The information may also include financial information such as a credit card number or bank account of the sender.

At block 404, the routine validates the information provided at block 402. As an example, the routine may validate the credit card number with a credit card company. If information cannot be validated, the routine may return a failure to the caller (not shown). Alternatively, the routine may continue at block 406 if, for example, the user is known or has established credit with the Ticket Server. In an embodiment, when the Ticket Server recognizes the user, the validation at block 404 includes authenticating the user. At block 406, the routine generates a requested number of tickets. In an embodiment, the routine returns a start code and a number of tickets to the caller at block 408. Alternatively, the routine may return a start code to its caller and an end code to an ISP indicated by the caller. In an embodiment, the routine may return an array of codes to its caller. The sender can then generate (or retrieve) and add a sender authenticating code to each outgoing message. The Sender's Mail Server (or any other process or device having the sender's one-way function and end code) can then verify the added sender authenticating code by determining whether the end code can be derived by applying the one-way function to the added code.

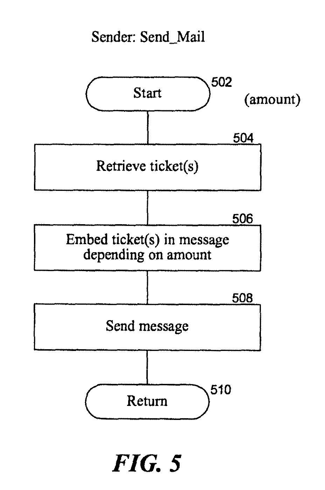

Figure 5 is a flow diagram illustrating an embodiment of a Send_Mail routine performed by a Sender's Computing Device. This routine may be called by a sender's mail client program when the sender sends a message. The routine begins at block 502 where it receives an amount as a parameter. In an embodiment, the routine may assign a default amount. At block 504, the routine retrieves a next ticket. In an embodiment, the routine may generate a sender authenticating code to add to the message. As an example, the routine may retrieve an indication of a sender authenticating code it previously added to a message (the "last-used code") and generate a prior code in the sequence. The routine may generate the prior code by generating all codes from the start code until the last-used code and then adding the second-to-last code (i.e., the code prior to the last-used code) to the message. The sender would more typically generate all the codes at once and then use them in reverse order of generation. In an embodiment, the routine may retrieve several tickets. As an example, if the amount value is $1 and the sender has 50¢ tickets, the routine may retrieve two tickets to satisfy the requested amount. If no sender authenticating code could be generated or retrieved at block 504 because the start code has already been used, the routine may attempt to acquire additional sender authenticating codes before sending the message.

At block 506, the routine adds the ticket(s) retrieved at block 504 to the message. Information including, e.g., a ticket, a value, a sender authenticating code, a unique identifier for the ticket, and an indication of a trusted entity may be added to a header or body of an electronic mail message. This information may be added as "metadata" or plain text, and may be in encrypted form or human-readable form. This information may be digitally signed to prevent tampering. At block 508, the routine sends the message. The routine also stores an indication of the sender authenticating code added at block 504. In an embodiment, the routine sends the message to the Sender's Mail Server. Alternatively, the routine indicates to the sender's mail client program that the message is ready for sending. The routine returns to its caller at block 510.

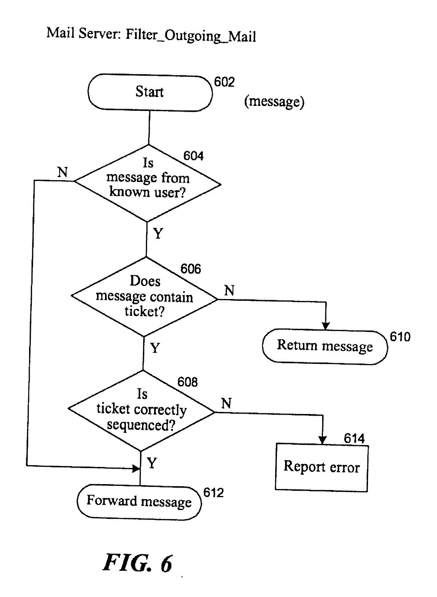

Figure 6 is a flow diagram illustrating an embodiment of a Filter_Outgoing_Mail routine performed by a Sender's Mail Server. The routine begins at block 602 where it receives an indication of a message as a parameter. At block 604, the routine determines whether the message is from a known user. As an example, the routine may verify that a sender's electronic mail address indicated in the message appears in a database of electronic mail addresses maintained by the Sender's Mail Server. If that is the case, the routine continues at block 606. Otherwise, the routine continues at block 612. At block 606, the routine determines whether the message contains a ticket. If the message contains a ticket, the routine continues at block 608. Otherwise, the routine continues at block 610. At block 608, the routine determines whether the ticket or, more specifically, a sender authenticating code in the ticket, is correctly sequenced to ensure that the message was not sent by an impostor. As an example, the routine determines whether the end code for the sender can be derived from the sender authenticating code in the ticket. If that is the case, the routine continues at block 612. Otherwise, the routine continues at block 614.

At block 610, the routine returns the message to the sender with an indication that the message does not contain a ticket. In an embodiment, the Sender's Mail Server can require every known sender to add a ticket with a code to outgoing messages. The code can be used to prevent impersonation. At block 612, the routine forwards the message. As an example, the routine may forward the message to a mail server of the indicated recipient. Alternatively, the routine may forward the message to an intermediate mail server. At block 614, the routine reports an error to the sender indicating that the ticket was not correctly sequenced. This situation may occur when, for example, the sender sent a message to the Sender's Mail Server but the mail was lost. In such a case, the Server: Request_Tickets routine may be called to generate another block of tickets.

In an embodiment, the sender's mail client program or some other component of the messaging system can require outgoing messages to have a ticket with a code.

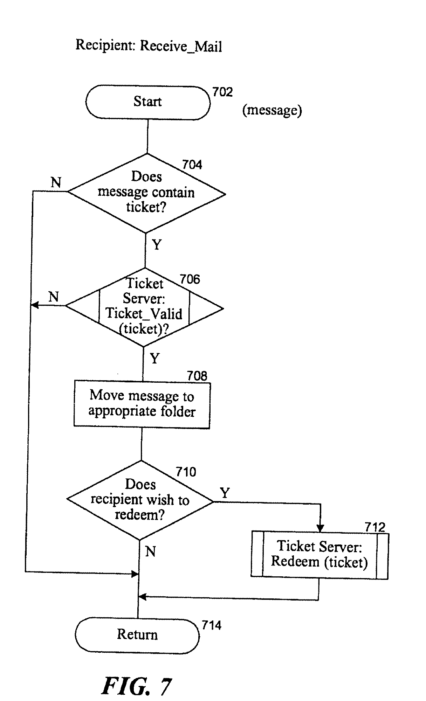

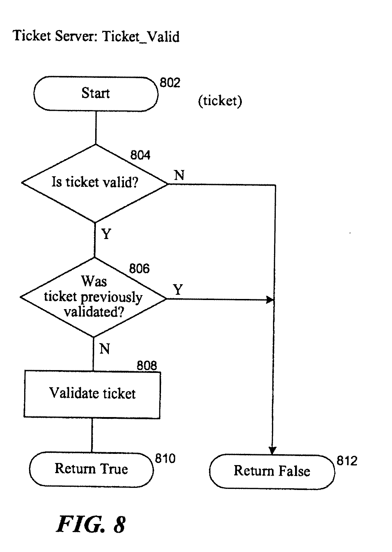

Figure 7 is a flow diagram illustrating an embodiment of a Receive_Mail routine performed by a recipient's mail server or mail client program. The routine begins at block 702 where it receives an indication of an incoming message as a parameter. At block 704, the routine determines whether the incoming message contains a ticket. If a ticket is found, the routine continues at block 706. Otherwise, the routine continues at block 714. At block 706, the routine calls a Ticket Server: Ticket_Valid routine to determine whether the ticket contained in the message is valid. The Ticket_Valid routine is described further below in relation to Figure 8. The Ticket Server that is called to validate the ticket is a trusted entity that is identified in the message. If the Ticket_Valid routine indicates that the ticket is valid, the routine continues at block 708. In an embodiment, the Recipient's Computing Device may validate the ticket merely by checking a checksum of the ticket instead of checking with the entity. If the ticket is invalid, the routine continues at block 714.

At block 708, the routine may move the message to an appropriate folder. As an example, the routine may move a message containing a ticket valued at $1 to a folder labeled "High Value" and a message containing a ticket with no value to a folder labeled "Free." Alternatively, the routine may move an incoming message not containing a ticket or containing an invalid ticket to an Inbox folder when the message is from a known sender or to a Free folder otherwise. Using an inbox rule or similar mechanism, the recipient may elect to automatically delete messages from unknown senders that do not contain a ticket or when the ticket is invalid.

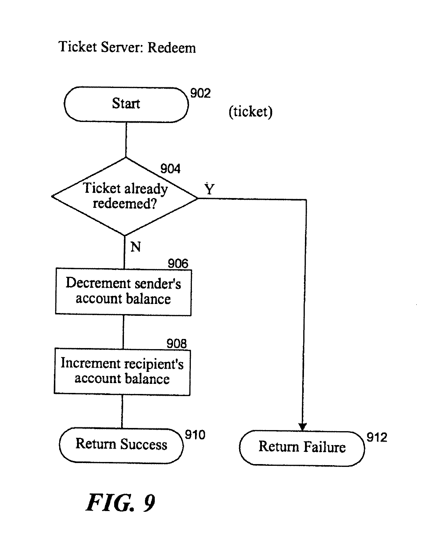

At block 710, the routine determines whether the recipient wishes to redeem the value of the ticket. As an example, the recipient's mail client program may provide a user interface element such as a pushbutton to receive an indication from the user. Alternatively, a mail client program may accept some other indication that a value is to be redeemed. If the user wishes to redeem the value, the routine continues at block 712. In an embodiment, the recipient's electronic mail client program may automatically redeem the value when the sender is unknown or meets some other criteria including, e.g., the sender's address is in a specified domain. Otherwise, the routine continues at block 714. At block 712, the routine calls a Redeem subroutine of the Ticket Server. This routine is further described below in relation to Figure 9. At block 714, the routine returns execution to its caller. The routine may also return an indication that the message contains no ticket, whether the ticket is valid, and whether the user redeemed the value associated with the ticket. The recipient's mail client program may further handle the message based on these indications. As an example, if the message contained no ticket, the mail client program may move the message to a Deleted Items folder.

In an embodiment, to conserve bandwidth, the recipient's electronic mail client may download only header information (including the ticket) from the recipient's mail server (not shown), and then download the remainder of the message if the recipient so indicates. The message may be deleted from the recipient's mail server after some period of time if the recipient does not download the remainder of the message. In an embodiment, the recipient's mail server validates tickets of incoming messages and includes the value of the ticket in the downloaded header.

Figure 8 is a flow diagram illustrating an embodiment of a Ticket_Valid routine of a Ticket Server. The routine begins at block 802, where it receives an indication of a ticket. At block 804, the routine determines whether the ticket is valid. The routine may do this by caiculating a checksum on the sender authenticating code in the ticket. Alternatively, the routine may attempt to determine whether the end code relating to the sender of the message can be derived from the sender authenticating code in the ticket. If the ticket is valid, the routine continues at block 806. Otherwise, the routine continues at block 812. At block 806, the routine determines whether the ticket was previously validated. The routine may do this by, e.g., checking a list of tickets the Ticket Server has previously validated. If the ticket was previously validated, the routine continues at block 812. Otherwise, the routine validates the ticket at block 808. In an embodiment, the routine validates the ticket by registering an indication that the ticket has been validated. The routine then continues at block 810 where it returns an indication that the ticket is valid. At block 812, the routine returns an indication that the ticket is invalid.

In an embodiment, the ticket server may permit multiple validations of a ticket until a recipient validates the ticket. This may be done when, e.g., intermediate mail servers desire to discard messages without valid tickets. In such a case, a caller of the Ticket_Valid routine may include an indication of whether the call is on behalf of a recipient.

Figure 9 is a flow diagram illustrating an embodiment of a Redeem routine performed by a Ticker Server. The routine begins at block 902 where it receives an indication of a ticket as a parameter. At block 904, the routine determines whether the ticket has already been redeemed. In an embodiment, the routine may make this determination by checking a list of tickets. If the ticket has already been redeemed, the routine continues at block 912. Otherwise, the routine continues at block 906. At block 906, the routine decrements the sender's account balance. At block 908, the routine increments the recipient's account balance. If the recipient does not have an account with the Ticket Server, the Ticket Server may forward the value to an indicated entity that has the recipient's account. The routine then continues at block 910 where it returns an indication of success to its caller. At block 912, the routine returns an indication of failure to its caller.

A recipient with a positive account balance exceeding a threshold value set by the entity holding the account may request disbursement (not shown). Disbursements may be in the form of, e.g., cash or prizes. Recipients may request payment when their account balance exceeds a certain amount or request tickets based on their balance. Alternatively, recipients may choose to donate ticket values they have collected to a charity, purchase "air miles," or participate in some other frequency-based program.

In an embodiment, senders and recipients maintain their own balance in addition to the ticket serving entity. In such a case, when a recipient redeems a value associated with a ticket, a notification may be sent to the sender of the ticket.

In an embodiment, senders may be able to void tickets. As an example, a sender who wishes to recall a message or does not want to have a ticket redeemed by a recipient can request the sender's ticket server to void the ticket. In such a case, the ticket would not be validated and would be treated by a recipient's system as an invalid ticket. Of course, voiding may be disallowed if the ticket has already been validated.

In an embodiment, the system may support a two-step redemption mechanism. In a first step, a recipient indicates to a sender of a message that subsequent electronic messages from the sender are undesired. If the sender persists in sending a subsequent message, the system would enable the recipient to redeem a value indicated in the message. In such a system, senders would have to keep track of recipients who do not wish to receive messages or risk having to pay to send messages to the recipients who have notified the sender. Alternatively, a central "opt-out" registry of recipients can be maintained. A message sender would then be on notice that recipients listed in the registry will redeem the value the sender indicates in the message.

The system functions with messages of various forms using various messaging and communications protocols. As an example, the system may help reduce unsolicited messages to add users to a list of "instant messenger" buddies. As another example, the system may help reduce electronic messages to devices such as cellular telephones, messaging-enabled wristwatches, personal digital assistants, and any other device capable of receiving electronic messages.

From the foregoing, it will be appreciated that specific embodiments of the invention have been described herein for purposes of illustration, but that various modifications may be made without deviating from the spirit and scope of the invention. Accordingly, the invention is not limited except as by the appended claims.

## Claims

1. A method for reducing unsolicited electronic messages, comprising:
acquiring a ticket from a ticketing entity, the ticket having a value specified by a sender of a message;
adding the acquired ticket to the message; and
forwarding the message with the added ticket to a recipient,
wherein upon receiving the message, the recipient can conditionally redeem the value of the ticket from the ticketing entity.

2. The method of claim 1 wherein the acquired ticket includes a sender authenticating code so that a mail server that receives the message can authenticate the sender of the message.

3. The method of claim 1 wherein a block of tickets is acquired at a time from the ticketing entity.

4. The method of claim 3 wherein each ticket of the block includes a code from a sequence of codes generated from a start code using a one-way function.

5. The method of claim 4 wherein the tickets are added to messages in reverse order of generation of their codes.

6. The method of claim 4 wherein a mail server is provided with an end code of the sequence of codes and determines whether a ticket of the message includes a code from which the end code can be derived.

7. The method of claim 1 wherein the recipient's mail system can validate the ticket with the ticketing entity before presenting the message to the recipient.

8. The method of claim 1 wherein the recipient's mail system can automatically discard messages with ticket values below a threshold value set by the recipient.

9. The method of claim 1 wherein when the recipient redeems the ticket, an account of the sender is debited.

10. The method of claim 1 wherein when the recipient redeems the ticket, an account of the recipient is credited.

11. The method of claim 1 wherein the message is an electronic mail message.

12. A system for reducing electronic messages, comprising:
a ticketing entity that issues tickets for use in sending electronic messages and that redeems tickets upon request;
a sender messaging system that adds issued tickets to messages sent by a sender, the sender specifying a value for each message; and
a recipient messaging system that allows a recipient to conditionally redeem tickets from the ticketing entity.

13. The system of claim 12 wherein a ticket that is sent by a sender includes a sender authenticating code and a sender messaging server authenticates the sender based on the sender authenticating code.

14. The system of claim 13 wherein the sender authenticating code is one of a sequence of codes generated by a one-way function and the sender messaging server has an end code of the sequence so it can verify whether the end code can be derived from the sender authenticating code of a message.

15. The system of claim 14 wherein the sender messaging server generates the sequence of codes and includes them in issued tickets.

16. The system of claim 14 wherein a sender messaging client generates the sequence of codes and provides a terminal code of the sequence to the sender messaging server.

17. The system of claim 12 wherein the recipient messaging system automatically discards messages with a ticket value less than a threshold value.

18. The system of claim 17 wherein the tickets of the discarded messages are automatically redeemed.

19. The system of claim 12 wherein the recipient messaging system presents messages to the recipient in an order based on the ticket values of the messages.

20. The system of claim 12 wherein the recipient messaging system validates with the ticketing entity whether a ticket can be redeemed.

21. The system of claim 20 wherein the recipient messaging system discards those messages whose tickets cannot be validated.

22. A method performed by a computer system for handling electronic messages, the method comprising:
receiving an electronic message having a ticket issued by a ticketing entity, the ticket having a value that is specified by a sender;
presenting the electronic message to a recipient;
when the recipient indicates to redeem the ticket, submitting the ticket to the ticketing agent for redemption wherein the ticketing entity charges the sender for a value of the ticket; and
when the recipient does not indicate to redeem the ticket, suppressing the redeeming of the ticket
so that a recipient can conditionally redeem tickets.

23. The method of claim 22 wherein the redemption includes decreasing an account balance of the sender and increasing an account balance of the recipient.

24. The method of claim 22 wherein a sender's account and a recipient's account are maintained by the same entity.

25. The method of claim 22 wherein a sender's account and a recipient's account are maintained by different entities.

26. The method of claim 25 wherein the entity that maintains the sender's account transfers the value to the entity that maintains the recipient's account.

27. The method of claim 22 including validating that the ticket can be redeemed before presenting the ticket to the recipient.
